# EUROPÄISCHE PATENTSCHRIFT

(11) **EP 3 041 704 B1**
(45) Veröffentlichungstag und Bekanntmachung des Hinweises auf die Patenterteilung: **17.04.2019**
(21) Anmeldenummer: 14750204.1
(22) Anmeldetag: 07.08.2014
(51) Int. Cl.: B60L 11/18, G07F 15/00, H04L 9/32, H04L 29/06, H02J 7/00, G01C 21/36, G05B 15/02, G06Q 10/02, H04W 4/02

(54) **VERFAHREN UND SYSTEM ZUM DYNAMISCHEN BEREITSTELLEN VON INFORMATIONEN ÜBER LADESTATIONEN**
METHOD AND SYSTEM FOR DYNAMICALLY PROVIDING INFORMATION OVER CHARGING STATIONS
PROCÉDÉ ET SYSTÈME DE FOURNITURE DYNAMIQUE D'INFORMATIONS SUR STATIONS DE CHARGE

(30) Priorität: 03.09.2013 DE 102013014527
(43) Veröffentlichungstag der Anmeldung: 13.07.2016
(73) Patentinhaber: innogy SE, 45128 Essen (DE)
(72) Erfinder: BECKER, Gernot, 44269 Dortmund (DE)
(74) Vertreter: Cohausz & Florack
(86) Internationale Anmeldenummer: PCT/EP2014/067018
(87) Internationale Veröffentlichungsnummer: WO 2015/032583

(56) Entgegenhaltungen:
- WO-A1-2013/053413
- DE-A1-102010 064 015
- US-A1- 2010 094 496
- US-A1- 2012 166 240
- US-A1- 2013 088 093

## Beschreibung

Der Gegenstand betrifft ein Verfahren sowie ein System zum Bereitstellen von Informationen über Ladestationen für Elektrofahrzeuge:
Die Akzeptanz von Elektrofahrzeugen hängt stark von der Möglichkeit ab, solche Fahrzeuge bequem laden zu können. Das Laden muss nicht nur im häuslichen Umfeld möglich sein, sondern jederzeit und auch in fremden Umgebungen. Hierzu werden derzeit Anstrengungen unternommen, ein Netz von Ladestationen aufzubauen. Da das Laden von Elektrofahrzeugen an Ladestationen in der Regel aber eine längere Zeit dauert, ist es notwendig, dass die Verfügbarkeit der Ladestation für einen Benutzer gewährleistet ist. Außerdem ist nicht damit zu rechnen, dass in den nächsten Jahren die Dichte der Ladestation derart hoch ist, wie dies heutzutage bei einem Tankstellennetz üblich ist, so dass ein Nutzer regelmäßig in einer fremden Umgebung eine Ladestation suchen muss. Für den Benutzer ist es nicht trivial, die verfügbaren und für ihn notwendigen Informationen über Ladestationen abzurufen. Es existieren zwar Angebote, Standorte von Ladestationen abzurufen, jedoch ist es stets in der Verantwortung des jeweiligen Nutzers, Ladestationen am richtigen Ort zu suchen.

Aus der US 2012/0166240A1 ist ein Verfahren bekannt, bei dem eine Ladeanfrage von einem Elektrofahrzeug generiert werden kann.

Vor diesem Hintergrund lag dem Gegenstand die Aufgabe zu Grunde, Ladestationen möglichst effizient und aktuell für Ladevorgänge zur Verfügung zu stellen. Diese Aufgabe wird durch ein Verfahren nach Anspruch 1 sowie ein System nach Anspruch 14 gelöst.

Es ist erkannt worden, dass in einem Zentralrechner Informationen zu Ladestationen abgespeichert werden können. Diese Ladestationsinformationen können zumindest eine einer jeweiligen Ladestation zugeordnete Ladestationskennung und zumindest eine der jeweiligen Ladestationen zugeordnete Ortsinformation enthalten. Für eine Mehrzahl von Ladestationen können die Ladestationsinformationen gespeichert sein.

Ortsinformationen können dabei beispielsweise Koordinaten der Ladestation sein. Außerdem können beispielsweise Informationen über eine Funkzelle, beispielsweise eine Mobilfunkzelle, Informationen über "sichtbare" W-LAN Netze im Umkreis der Ladestation, eine Adressbezeichnung samt Straße und Ort oder dergleiche Ortsinformationen sein. Solche Ortsinformationen lassen sich jeder einzelnen Ladestation zuordnen und zusammen mit der jeweiligen Ladestationskennung abspeichern.

Für einen Nutzer ist es nun möglich, Ladestationen aufzufinden, indem er von einer Mobilstation zumindest eine Identifikation der Mobilstation und eine geographische Information der Mobilstation enthaltene Ladeanfrage absendet und diese in einem Zentralrechner empfangen wird. Eine Identifikation einer Mobilstation kann dabei beispielsweise eine Telefonnummer, eine E-Mailadresse, eine Pagernummer, eine International Mobile Subscriber Identification (IMSI) Nummer, eine MAC Nummer, eine IP-Adresse oder dergleichen sein. Eine Mobilstation kann dabei beispielsweise ein Mobiltelefon, ein Smartphone, ein Tabletcomputer, ein Laptopcomputer, ein Navigationsgerät, ein Boardcomputer eines Fahrzeugs oder dergleichen sein.

Geographische Informationen der Mobilstation können den Ort der Mobilstation ausweisen. Hierbei können die geographischen Informationen beispielsweise die gleichen Informationen beinhalten, wie die oben genannten Ortsinformationen. Dies sind zum Beispiel GPS-Koordinaten, Zellinformationen, W-LAN-Netzinformationen, Straße und Ort oder dergleichen.

In dem Zentralrechner sind die Ladestationsinformationen gespeichert und eine Ladeanfrage wird empfangen. Anschließend kann ein Tupel aus Ladestationsinformationen aus der Mehrzahl von gespeicherten Ladestationsinformationen ausgewählt werden. Diese Auswahl erfolgt gegenständlich abhängig von zumindest der empfangenen Ladeanfrage. Hierbei wird insbesondere zunächst die empfangene geographische Information mit der jeweiligen Ortsinformation der Ladestation verglichen. Das Vergleichen bedeutet, dass ein Abgleich erfolgt, in welcher räumlichen Lage zueinander die Mobilstation zu der Ladestation ist. Der Vergleich kann derart sein, dass ein Grenzwert nicht überschritten werden darf. Beispielsweise darf ein gewisser Entfernungswert nicht überschritten werden. Der Vergleich kann derart sein, dass beispielsweise eine Entfernung im Sinne einer Wegstrecke unter Berücksichtigung von Routeninformationen oder eine Entfernung im Sinne einer Luftlinienentfernung ist. Auch Ortsinformationen im Sinne von Ortsnamen und Straßennamen oder dergleichen können miteinander verglichen werden. Führt der Vergleich der Ortsinformation mit der geographischen Information zu einem Vergleichsergebnis, welches einen bestimmten Entfernungswert nicht überschreitet, kann die entsprechende Ladestationsinformation zumindest in Teilen dem Tupel hinzugefügt werden. Es versteht sich, dass auch mehr als eine Ladestation dem Vergleichskriterium genügen kann, sodass das Tupel ein oder mehr Ladestationsinformationen beinhalten kann.

Nachdem ein Vergleich abgeschlossen wurde, kann das Tupel zumindest in Teilen unter Verwendung der Identifikation der Mobilstation an die Mobilstation gesendet werden. Beispielsweise kann abhängig vom Übertragungskanal und dessen Bandbreite nur ein Teil des Tupels übertragen werden, beispielsweise nur die ersten drei oder ersten vier Datensätze des Tupels. Auch kann abhängig von Benutzervorgaben die Größe des zu übertragenden Tupels eingeschränkt werden und das Tupel nach dem Vergleichsergebnis entsprechend verkürzt werden.

Für den Nutzer ist es nicht nur wichtig zu wissen, ob eine Ladestation in seiner Nähe aufgestellt ist, sondern auch, ob diese funktionsbereit ist. Der Status der Ladestation kann in Statusinformationen gespeichert sein. Statusinformationen können beispielsweise Informationen sein, ob eine Ladestation betriebsbereit ist oder nicht. Ferner kann in der Statusinformation gespeichert sein, ob die Ladestation für einen bestimmten Zeitraum reserviert ist. Auch kann gespeichert sein, ob die Ladestation belegt ist, also im Moment der Ladeanfrage ein Elektrofahrzeug an dieser lädt. Eine Restladezeit kann ebenfalls in der Statusinformation vorhanden sein.

Darüber hinaus ist es teilweise notwendig zu wissen, von welchem Betreiber eine Ladestation betrieben wird. Insbesondere bei Nutzern, die Versorgungsverträge nur mit bestimmten Betreibern abgeschlossen haben, ist es notwendig zu wissen, welche Ladestationen von diesen Betreibern betrieben werden. Insofern wird auch vorgeschlagen, dass in den Ladestationsinformationen auch Betreiberinformationen gespeichert sind. Dies kann beispielweise eine Betreiber-ID sein.

Es gibt unterschiedliche Arten von Ladestrategien und Lademechanismen. Die Bedeutendsten sind entweder Wechselstrom- (AC) oder Gleichstromladung (DC). Abhängig vom Ladesteuergerät innerhalb eines Fahrzeugs ist dieses nur für das AC-Laden, nur für das DC-Laden oder für das Laden mit AC und DC geeignet. Insofern ist es auch notwendig zu wissen, ob das eigene Elektrofahrzeug an der jeweiligen Ladestation geladen werden kann. Der Ladetyp ist eine solche Information, die hierfür notwendig ist. Daher wird auch vorgeschlagen, dass der Ladetyp in den Ladestationsinformationen gespeichert ist.

Schließlich existieren eine Vielzahl unterschiedlicher Stecker, beispielsweise Typ1, Typ 2, Typ 3, Combo, Chademo und Stecker anderer Standarts. Je nachdem, welcher Steckertyp von einer Ladestation unterstützt wird, kann ein Elektrofahrzeug an dieser laden oder nicht. Insofern ist auch der Steckertyp eine Information einer jeweiligen Ladestation, die in deren Ladestationsinformation gespeichert sein kann.

Wie bereits erläutert, ist die Statusinformation eine Information darüber, ob ein Laden an einer Ladestation derzeit oder zukünftig möglich ist. Eine momentane Ladeverfügbarkeit kann beispielsweise der aktuelle Status einer Ladestation sein. Dieser kann von einer jeweiligen Ladestation in Abständen, vorzugsweise regelmäßig und/oder bei Änderungen empfangen werden. Hierzu zählen insbesondere die Informationen, ob die Ladestation funktionsfähig ist oder nicht oder ob an der Ladestation derzeit ein Ladevorgang abläuft. Ob eine Ladestation zukünftig, das heißt in einem Zeithorizont zwischen beispielsweise zehn Minuten und einer Stunde verfügbar ist, kann beispielsweise auch von Reservierungsinformationen abhängen. Zunächst kann in den Statusinformationen enthalten sein, wie lange ein derzeit laufender Ladevorgang noch ablaufen wird. Hieraus kann ermittelt werden, ab wann eine Ladestation frei ist. Aus Reservierungsinformationen kann ermittelt werden, ab wann eine Ladestation potentiell belegt ist und bis wann diese potentielle Belegung andauern wird. Die Reservierungsinformation kann aktualisiert werden, wenn eine Reservierung in Anspruch genommen wird oder nicht. Im letzteren Fall kann die Reservierungsinformation auch gelöscht werden. Im ersteren Fall würde die Reservierungsinformation durch einen Ladestatus ersetzt, indem die prognostizierte Ladedauer enthalten sein kann.

Gemäß einem Ausführungsbeispiel wird vorgeschlagen, dass die Ladeanfrage zusätzlich Informationen zu einem Ladetyp des Elektrofahrzeugs und/oder einem Steckertyp des Elektrofahrzeugs und/oder einer Benutzeridentifikation und/oder einer Restreichweite des Elektrofahrzeugs und/oder einem Ladezustand einer Batterie des Elektrofahrzeugs enthalten sind. Wie bereits zu den Informationen zu der Ladestation ausgeführt, ist auch das Elektrofahrzeug gekennzeichnet durch verschiedene Charakteristika wie den Ladetyp und den Steckertyp. Insbesondere ist es notwendig, dass Ladetyp und Steckertyp des Elektrofahrzeugs zu verfügbaren Ladetypen und Steckertypen der Ladestation passen. Insofern ist diese Information in der Ladeanfrage notwendig, um für den Ladebedarf geeignete Ladestationen auswählen zu können.

Eine Benutzeridentifikation kann dazu genutzt werden, Betreiberinformationen zentralseitig zu ermitteln und mit Betreiberinformationen von den Ladestationen, wie beschrieben, vergleichen zu können.

Eine Restreichweite eines Elektrofahrzeugs kann dazu genutzt werden, das Vergleichskriterium betreffend die Ortsinformation und die geographische Information anzupassen. Es ist nicht sinnvoll, Ladestationen in das Tupel aufzunehmen, welche von dem Elektrofahrzeug auf Grund einer geringen Rechtreichweite nicht mehr erreicht werden kann. Insofern ist die Restreichweite ein sinnvolles Vergleichskriterium zur Auswahl von Ladestationen.

Schließlich kann auch der Ladezustand (SOC) einer Batterie des Elektrofahrzeugs in der Ladeanfrage enthalten sein. Aus dem Ladezustand kann beispielsweise errechnet werden, wie lange in etwa ein Ladevorgang dauert. Nur Ladestationen, die für diesen Zeitraum zuzüglich der Anfahrt des Elektrofahrzeugs an die betreffende Ladestation verfügbar sind und noch nicht reserviert sind, lohnt es sich, dem Benutzer diese anzuzeigen. Somit ist mit Hilfe des Ladezustands gewährleistbar, dass eine Batterie an einer ausgewählten Ladestation auch tatsächlich bis zu einem gewissen Ladezustand, beispielsweise 80 %, aufgeladen werden kann.

Die geographischen Informationen können vorzugsweise in der Mobilstation selbst oder durch das Mobilfunknetz erfasst werden. Die Mobilstation kann die geographischen Informationen unmittelbar selbst ermitteln und an die Ladeanfrage anfügen. Auch ist es möglich, dass die Mobilstation die Ladeanfrage ohne geographische Informationen aussendet und die geographischen Informationen durch das Mobilfunknetz ergänzt werden. Hierbei ist es beispielsweise denkbar, dass diejenige Funkzelle, die die Ladeanfrage empfängt, dieser ihre Kennung hinzufügt und somit geographische Informationen an die Ladeanfrage anfügt.

Gemäß einem Ausführungsbeispiel wird vorgeschlagen, dass das Tupel zusätzlich abhängig von der empfangenen Ladeanfrage derart ausgewählt wird, dass zumindest die empfangene Information zu dem Ladetyp des Elektrofahrzeugs mit dem Ladetyp der jeweiligen Ladestation verglichen wird. Beispielsweise wird eine Auswahl getroffen, welche Ladestationen dem Elektrofahrzeug die geeignete Ladestrategie zur Verfügung stellt. Beispielsweise bei einem DC Elektrofahrzeug beziehungsweise einem Elektrofahrzeug mit einem Ladesteuergerät, welches nur DC Ladung erlaubt, können diejenigen Ladestationen ausgewählt werden, welche DC Ladung unterstützen.

Auch wird vorgeschlagen, dass das Tupel abhängig von der empfangenen Ladeanfrage derart ausgewählt wird, dass die empfangene Information zu dem Steckertyp des Elektrofahrzeugs mit dem Steckertyp der jeweiligen Ladestation verglichen wird. Je nachdem, welche Steckertypen von einer Ladestation unterstützt werden, können mehr oder weniger Elektrofahrzeuge an dieser Ladestation geladen werden. Es ist notwenig, dass die Steckertypen zueinander passen und nur diejenigen Ladestationen dem Tupel hinzugefügt werden, an welchen das Elektrofahrzeug abhängig vom Steckertyp tatsächlich laden kann.

Auch wird vorgeschlagen, dass das Tupel zusätzlich abhängig von der empfangenen Ladeanfrage derart ausgewählt wird, dass die empfangene Information der Restreichweite des Elektrofahrzeugs mit Ortsinformationen der jeweiligen Ladestation verglichen wird. Zunächst kann beispielsweise eine Wegstrecke zwischen dem aktuellen Ort der Mobilstation beziehungsweise des Elektrofahrzeugs und einer jeweiligen Ladestation ermittelt werden. Anschließend kann überprüft werden, für welche Wegstrecken die Restreichweite des Elektrofahrzeugs ausreicht. Nur diejenigen Ladestationen, die innerhalb eines durch die Restreichweite bestimmten Radius von dem Elektrofahrzeug entfernt aufgestellt sind, können anschließend dem Tupel hinzugefügt werden.

Auch ist es möglich, das Tupel derart auszuwählen, dass abhängig von der Benutzeridentifikation eine Betreiberinformation ermittelt und diese mit Betreiberinformationen der Ladestationen verglichen wird. So kann beispielsweise einer Benutzeridentifikation eine Mehrzahl von Betreiberinformationen zugeordnet sein und alle diejenigen Ladestationen, die diesen Betreiberinformationen entsprechen, können dem Tupel hinzugefügt werden. Somit wird sichergestellt, dass der Kunde den Ladevorgang an der dem Tupel hinzugefügten Ladestation auch durchführen und bezahlen kann.

Darüber hinaus kann das Tupel abhängig von der empfangenen Ladeanfrage derart ausgewählt werden, dass ein Sollstatus für eine Ladestation mit Statusinformation der jeweiligen Ladestation verglichen wird. Ein Sollstatus ist in der Regel frei oder verfügbar. Nur wenn dieser Status vorhanden ist, kann die Ladestation dem Tupel hinzugefügt werden. Bei einem jeweiligen positiven Vergleichsergebnis können die entsprechenden Ladestationsinformationen zumindest in Teilen dem Tupel hinzugefügt werden.

Neben der Wegstrecke zwischen einem Elektrofahrzeug und einer Ladestation ist auch die Verkehrssituation entscheidend dafür, ob das Elektrofahrzeug die Ladestation erreichen kann. Insofern wird auch vorgeschlagen, dass aus der empfangenen geographischen Information zusammen mit vorzugsweise dynamisch gespeicherten Verkehrsinformation und der Ortsinformation der jeweiligen Ladestation eine relative Entfernungsinformation berechnet wird. Die relative Entfernungsinformation kann verglichen werden mit der Restreichweite des Elektrofahrzeugs und nur wenn die Restreichweite größer ist als die relative Entfernungsinformation kann das Tupel um die Information der jeweiligen Ladestation ergänzt werden.

Vorzugsweise möchte ein Nutzer die Ladestation erreichen, die für ihn am schnellsten verfügbar ist. Insofern kann es sinnvoll sein, dass die Ladestationsinformationen in dem Tupel priorisiert angeordnet werden. So kann beispielsweise die Ladestation als erstes in dem Tupel angeordnet werden, deren relative Entfernung von dem aktuellen Ort des Elektrofahrzeugs am geringsten ist. Auch kann abhängig von dem Vergleichsergebnis eine Priorisierung derart erfolgen, dass je größer die Übereinstimmung zwischen der Ladeanfrage und der Ladestationsinformation ist, die entsprechenden Ladestationsinformation weiter oben in dem Tupel angeordnet wird.

Das Tupel mit den verschiedenen Ladestationsinformationen kann an die Mobilstation übertragen werden. Innerhalb der Mobilstation kann der Benutzer eine Auswahl aus dem Tupel treffen und eine bestimmte Ladestation auswählen. Um sicherzustellen, dass die von dem Nutzer ausgewählte Ladestation auch zu dem Zeitpunkt verfügbar ist, zu dem er die Ladestation erreicht, kann er die Ladestationskennung der ausgewählten Ladestation zurück an die Zentrale übermitteln. Insofern wird vorgeschlagen, dass eine ausgewählte Ladestationsinformation einer Ladestation ausgewählt aus dem Tupel von der Mobilstation empfangen wird und dass die Ladestationskennung aus der ausgewählten Ladestation ermittelt wird. Darüber hinaus ist es möglich, dass eine Reservierungsinformation mit der Ladestationskennung für die ausgewählte Ladestation erstellt wird. Wird zentralseitig eine Ladestationskennung einer ausgewählten Ladestation empfangen, so kann davon ausgegangen werden, dass ein Nutzer diese Ladestation für seinen Ladevorgang reservieren will. Insofern kann bei dem Empfangen der Ladestationskennung diese reserviert werden, indem für diese Ladestation eine Reservierungsinformation erstellt wird.

Die Reservierungsinformation kann gemäß einem Ausführungsbeispiel eine Reservierungsdauer und/oder eine Startzeit eines Reservierungszeitraums und/oder eine Endzeit eines Reservierungszeitraums und/oder eine Dauer einer Reservierungswartezeit und/oder eine Benutzeridentifikation enthalten. Der Benutzer kann beim Auswählen der Ladestation angeben, wann er diese reservieren will. Diese Information kann als Startzeit eines Reservierungszeitraums dienen und der Reservierungsinformation hinzugefügt werden. Auch ist es möglich, dass der Nutzer den Ladevorgang innerhalb eines gewissen Zeitfensters durchführen möchte. Diese Information kann er angeben und diese wird als Reservierungszeitraum in der Reservierungsinformation gespeichert.

Auch ist es möglich, dass aus der Restreichweite oder dem Ladezustand der Batterie eine Ladedauer abgeschätzt wird. Hieraus kann zusammen mit einer Startzeit eine Endzeit eines Reservierungszeitraums berechnet werden.

Auch ist es möglich, dass zusammen mit den Verkehrsinformationen die relative Entfernungsinformation berechnet wird und ausgehend von der relativen Entfernungsinformation eine Fahrzeit berechnet wird, die das Elektrofahrzeug zu einer jeweiligen Ladestation voraussichtlich benötigt. Diese Information kann als Untergrenze für eine Dauer einer Reservierungswartezeit verwendet werden. Das heißt, dass es zumindest für die Dauer der Fahrzeit von dem aktuellen Standort des Elektrofahrzeugs zu einer jeweiligen Ladestation diese reserviert ist. Zusätzlich zu der prognostizierten Fahrzeit kann noch ein Puffer von einigen Minuten, beispielsweise zwischen fünf Minuten und dreißig Minuten hinzugefügt werden, so dass die Dauer einer Reservierungswartezeit sich beispielsweise zusammensetzt aus einer prognostizierten Fahrtdauer zuzüglich fünfzehn Minuten.

Auch ist es möglich, dass die Dauer einer Reservierungswartezeit abhängig von einem Preissignal bestimmt wird. Dabei ist es beispielsweise möglich, dass ein Nutzer bei der Reservierung unterschiedliche Preissignale auslösen kann. Je höher der Preis ist, desto größer kann eine Reservierungswartezeit sein. Hierbei ist es beispielsweise möglich, dass ein Benutzer die ausgewählte Ladestationskennung über unterschiedliche Empfängernummern übermitteln kann. Je nachdem welche Nummer der Nutzer wählt, kann eine andere Dauer einer Reservierungswartezeit erfolgen wenn zum Beispiel jeder Nummer ein anderes Preissignal und somit ein anderer Preis zugeordnet ist. Eine kostenfreie Reservierung kann beispielsweise eine fünfminütige Reservierungswartezeit auslösen, wohingegen eine Reservierung bei einem bestimmten Preis eine längere Dauer einer Reservierungswartezeit auslösen kann.

Gemäß einem Ausführungsbeispiel wird vorgeschlagen, dass, wie beschrieben, die Dauer der Reservierungswartezeit abhängig von der geographischen Information, der Ortsinformation und vorzugsweise der relativen Entfernungsinformation berechnet wird. Hieraus kann eine prognostizierte Fahrtzeit von dem aktuellen Ort des Elektrofahrzeugs zu der Ladestation berechnet werden und diese als Untergrenze für die Dauer der Reservierungswartezeit angenommen werden. Während der Dauer der Reservierungswartezeit ist vorzugsweise ein Ladevorgang nur durch denjenigen aktivierbar, der den Reservierungsvorgang angestoßen hat. Hierzu kann beispielsweise die Benutzeridentifikation verwendet werden, die in den Reservierungsinformationen enthalten sein kann. Möchte ein Nutzer mit einer anderen Benutzeridentifikation an einer Ladestation laden, die sich in der Reservierungswartezeit befindet, kann der Ladevorgang angelehnt werden, da die Benutzeridentifikation nicht die Korrekte ist. Andererseits kann der berechtigte Benutzer während der Dauer der Reservierungswartezeit den Ladevorgang unter Verwendung seiner Benutzeridentifikation aktivieren.

Trifft der Benutzer nun, nachdem er eine Ladestation ausgewählt hat, an der Ladestation ein, kann er sein Elektrofahrzeug mit der Ladestation verbinden. Entweder über die Mobilstation oder über das Elektrofahrzeug oder über die Verbindung zwischen dem Elektrofahrzeug und der Ladestation kann eine Ladeanforderung umfassend eine Ladestationskennung und eine Benutzeridentifikation generiert werden. Diese Ladeanforderung kann zentralseitig empfangen werden. Die empfangene Ladeanforderung kann mit gegebenenfalls vorhandenen Benutzeridentifikationen von Reservierungsinformationen verglichen werden. Nur bei einem positiven Vergleichsergebnis kann der Ladestrom freigegeben werden. Ist keine Reservierungsinformation für die entsprechende Ladestation vorhanden, kann der Ladestrom ohnehin freigegeben werden.

Das Übermitteln der Ladeanfrage und/oder das Übermitteln der ausgewählten Ladestationsinformation und/oder das Übermitteln der Ladeanforderung kann von der Mobilstation über einen Signalisierungskanal eines Mobilfunknetzes übertragen werden. Die Verwendung des Signalisierungskanals kann insofern vorteilhaft sein, als dass durch Verwendung unterschiedlicher Empfängernummern unterschiedliche Preissignale erzeugt werden können. So kann das Übermitteln der Ladeanfrage, der ausgewählten Ladestationsinformation oder der Ladeanforderung gebührenpflichtig sein, welche über das Mobilfunknetz abgerechnet werden. Zu denken ist beispielsweise an eine kostenpflichtige SMS, die an eine bestimmte Empfängernummer übermittelt wird. Je nachdem, an welche Empfängernummer diese übermittelt wird, können sich unterschiedliche Kosten ergeben.

Auch ist es möglich, dass das Senden der Ladeanfrage und/oder der ausgewählten Ladestationsinformation und/oder der Ladeanforderung ein nachrichtenspezifisches und/oder empfängerspezifisches Berechnungssignal in dem Mobilfunknetz auslöst. Dabei ist es beispielsweise möglich, dass der Inhalt oder der Empfänger einer solchen Nachricht ausgewertet wird und entsprechend ein Berechnungssignal ausgelöst wird. Das Berechnungssignal kann an eine Abrechnungszentrale übermittelt werden woraufhin eine Abrechnung erfolgen kann.

Die zuvor genannten Verfahren können auch als Computerprogramm oder als auf einem Speichermedium gespeichertes Computerprogramm realisiert werden. Hierbei kann mobilstationsseitig und/oder zentralseitig ein Mikroprozessor zur Durchführung der jeweiligen Verfahrensschritte durch ein Computerprogramm geeignet programmiert sein.

Die Merkmale der Verfahren und Vorrichtungen sind frei miteinander kombinierbar. Insbesondere können Merkmale und Teilmerkmale der Beschreibung und/oder der abhängigen sowie unabhängigen Ansprüche, auch unter vollständiger oder teilweiser Umgehung von Merkmalen oder Teilmerkmalen der unabhängigen Ansprüche, in Alleinstellung oder frei miteinander kombiniert eigenständig erfinderisch sein.

Nachfolgend wird der Gegenstand anhand einer Ausführungsbeispiele zeigenden Zeichnung näher erläutert. In der Zeichnung zeigen:
- Fig. 1: schematisch ein System zum Bereitstellen von Informationen über Ladestationen;
- Fig. 2: ein Ablaufdiagramm von Nachrichten zwischen verschiedenen Elementen des Systems nach Figur 1 gemäß einem Ausführungsbeispiel

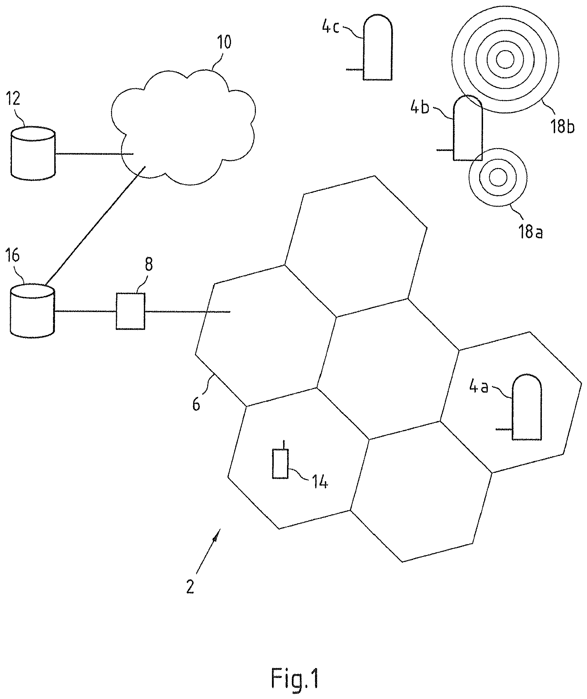

Figur 1 zeigt ein System 2 zum Bereitstellen von Informationen über Ladestationen 4a-c. Die Ladestationen sind schematisch dargestellt und verfügen in der Regel über einen Anschluss an ein Energieversorgungsnetz und einem Ausgang zum Anschluss an ein Elektrofahrzeug. Ferner ist in den Ladestationen 4 die Sensorik zur Überwachung eines Ladevorgangs vorhanden. Außerdem ist in den Ladestationen 4 eine Kommunikationseinrichtung als auch ein Messgerät vorhanden. Die Funktion einer Ladestation als solche ist hinlänglich bekannt.

In der Figur 1 ist schematisch ein Mobilfunknetz 6 dargestellt, welches über einen Netzübergang 8 mit dem Internet 10 verbunden ist. An das Internet 10 ist beispielsweise ein Zentralrechner 12 angeschlossen, der sowohl mit den Ladestationen 4 als auch einer Mobilstation 14 kommunizieren kann. Ferner ist ein SMS-Servicecenter 16 dargestellt. Schließlich ist schematisch der Funkbereich zweier W-LAN Netze 18a, 18b dargestellt.

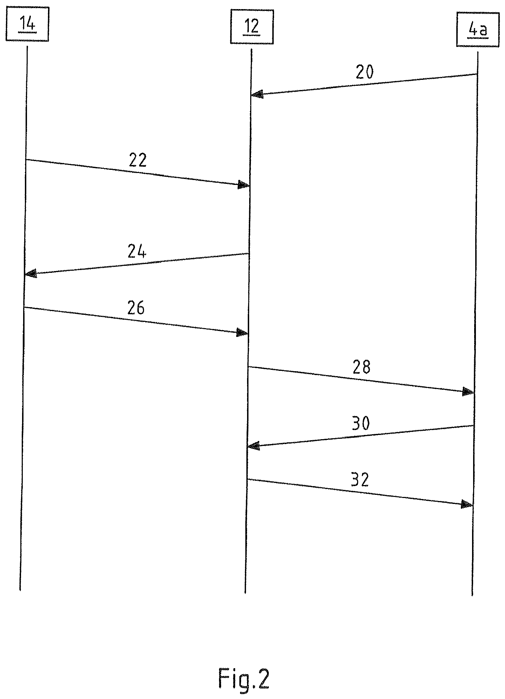

Der Zentralrechner 12 ermöglicht es, den Mobilstationen 14 Informationen über die Ladestationen 4a-c zur Verfügung zu stellen. Hierzu erfolgt eine Kommunikation, wie sie beispielhaft in der Figur 2 dargestellt ist.

In der Figur 2 ist beispielhaft lediglich die Kommunikation zwischen der Ladestation 4a und dem Zentralrechner 12 dargestellt. Die Ladestation 4b und 4c kommunizieren entsprechend auch mit dem Zentralrechner 12.

Zunächst übermittelt die Ladestation 4a ihre Ladestationskennung zusammen mit einer Ortsinformation über das Mobilfunknetz 6 und das Internet 10 an den Zentralrechner 12 (20). Hierbei ist auch eine Statusinformation der Ladestation 4a enthalten. Darüber hinaus kann eine Betreiberinformation, eine Ladetyp oder ein Steckertyp in dieser Information enthalten sein. Auch ist es möglich, dass anhand der Ladestationskennung welche in diesem Schritt übertragen wird, in dem Zentralrechner 12 aus einer Datenbank die weiteren Informationen wie Betreiberinformation, Ladetyp und Steckertyp der Ladestation 4a ermittelt wird.

Eine Statusinformation kann von der Ladestation 4a an den Zentralrechner 12 ebenfalls übermittelt (20) werden. Insbesondere für den Fall eines Defektes der Ladestation 4a ist diese Information relevant. Auch für den Fall, dass ein spontaner Ladevorgang an der Ladestation 4a aktiviert wird, ohne das eine vorherige Reservierung stattgefunden hat, kann diese Information über den aktuellenLadestatus belegt und die aktuelle Ladedauer in der Statusinformation enthalten sein. Die Information in der Nachricht 20 kann in Abständen, vorzugsweise regelmäßig oder lediglich bei Änderungen von der Ladestation 4a an den Zentralrechner 12 übermittelt werden. Dabei ist zu beachten, dass diese Informationen von allen Ladestationen 4a-c dem Zentralrechner 12, soweit verfügbar, zur Verfügung gestellt werden.

Somit wird in dem Zentralrechner 12 ein aktuelles Verzeichnis über alle Ladestationen samt ihrer Statusinformationen, Betreiberinformationen, Ladetyp und Steckertyp als auch Reservierungsinformationen gespeichert.

Möchte ein Benutzer eine Ladestation finden, so kann er über seine Mobilstation 14 eine Ladeanfrage (22) an den Zentralrechner 12 übermitteln. Die Ladeanfrage (22) wird über das Mobilfunknetz 6, den Netzübergang 8 und das Internet 10 an den Zentralrechner 12 übermittelt. In der Ladeanfrage (22) ist zumindest die Identifikation der Mobilstation 14 als auch eine geographische Information der Mobilstation 14 enthalten.

In dem gezeigten Beispiel befindet sich die Mobilstation 14 in einer bestimmten Zelle des Mobilfunknetzes 6. Kennt die Mobilstation 14 die Zellenidentifikation dieser, kann diese Information bereits in der Ladeanfrage (22) enthalten sein.

Auch ist es möglich, dass die Mobilstation 14 beispielsweise einen GPS-Empfänger aufweist und hierüber GPS-Koordinaten empfangen kann. Diese GPS-Koordinaten können auch als geographische Information an den Zentralrechner 12 übertragen werden.

Auch ist es möglich, dass die Mobilstation 14 keine eigenen geographischen Informationen kennt. Während der Übermittlung der Ladeanfrage von der Mobilstation 14 an den Zentralrechner 12 passiert diese das Mobilfunknetz 6. Hierbei muss die Nachricht beispielsweise zunächst über die Base Transceiver Station (BTS) der jeweiligen Zelle des Mobilfunknetzes 6 geleitet werden. Dort kann beispielsweise eine Ortsinformation, zumindest die Identifikation der BTS enthaltend, angefügt werden.

Neben der Ortsinformation und der Identifikation der Mobilstation kann in der Ladeanfrage 22 zusätzlich noch eine Information über beispielsweise den Ladetyp des Elektrofahrzeugs enthalten sein. Diese Information kann beispielsweise eine Information darüber sein, ob das Elektrofahrzeug AC und/oder DC laden kann. Auch eine Information über den Steckertyp des Elektrofahrzeugs kann in der Ladeanfrage (22) enthalten sein. Neben der Identifikation der Mobilstation 14 kann auch eine weitere Benutzeridentifikation enthalten sein. Auch kann der Nutzer, während er die Ladeanfrage generiert, eine Restreichweite des Elektrofahrzeugs angeben, welche in der Ladeanfrage (22) enthalten sein kann.

Die Ladeanfrage (22) wird in dem Zentralrechner 12 empfangen. Die Informationen der Ladeanfrage (22) werden mit Informationen der jeweiligen Ladestation 4a, c verglichen. Hierbei wird zunächst beispielsweise überprüft, welche Entfernung zwischen der Mobilstation 14 und der jeweiligen Ladestation 4a-c liegt. Diese Entfernungsberechnung kann beispielsweise unter Verwendung von Routeninformationen erfolgen. Zusätzlich kann eine Fahrtzeitberechnung erfolgen, wobei diese entweder lediglich anhängig von der Route oder auch abhängig von dynamischen Verkehrsinformationen erfolgen kann. Alle Ladestationen 4a-c, welche innerhalb der Restreichweite des Elektrofahrzeugs liegen, können vorausgewählt werden. Anschließend kann beispielsweise eine Maximalentfernung angenommen werden, die eine Ladestation 4a-c von der Mobilstation 14 im vorliegenden Fall entfernt sein darf. Alle Ladestationen, die diese Maximalentfernungsbedingung erfüllen, werden weiter ausgewählt.

Anschließend erfolgt eine Filterung der bereits ausgewählten Ladestationen abhängig von ihrem Status. Nur verfügbare, nicht reservierte Ladestationen werden gefiltert. Darüber hinaus wird gefiltert, welche Ladestationen den notwenigen Ladetyp und Steckertyp unterstützen und ob die Betreiberinformationen für den jeweiligen Nutzer ein Laden ermöglichen. Die abschließend verbleibenden Ladestationen werden dem Tupel von Ladestationsinformationen hinzugefügt. Hierbei kann in dem Zentralrechner 12 eine Priorisierung erfolgen, derart, dass die Ladestation 4a-c mit der kürzesten Fahrtzeit als erstes abgespeichert wird und in absteigender Reihenfolge die jeweils weiter entfernten Ladestationen 4a-c.

Anschließend kann in dem Zentralrechner beispielsweise das Tupel auf maximal zehn Einträge verkürzt werden. Dieses Tupel wird von dem Zentralrechner 12 über das Internet 10 und den Netzübergang 8 sowie das Mobilfunknetz 6 zurück an die Mobilstation 14 übertragen (24).

In der Mobilstation 14 kann eine Anzeige der Information aus dem Tupel beispielsweise in der Reihenfolge des Abspeicherns erfolgen.

Anschließend kann der Nutzer aus den angezeigten Ladestationen eine auswählen. Die entsprechende Auswahlinformation kann beispielsweise als SMS von der Mobilstation 14 an das SMS-Servicecenter 16 übermittelt werden. Hierzu kann beispielsweise eine bestimmte Empfängernummer verwendet werden. In der SMS Servicezentrale 16 wird beim Empfangen der SMS ein Preissignal ausgelöst. Dieser Ablauf kann bereits bei der Ladeanfrage (22) verwendet werden. Der Einfachheit halber wird dies jedoch nur im Zusammenhang mit der Auswahl beschrieben.

Nachdem das Preissignal erzeugt wurde, kann die ausgewählte Ladestationsinformation von dem SMS-Servicecenter 16 über das Internet 10 an die Zentrale 12 übermittelt werden. In der Zentrale 12 kann eine Reservierungsinformation erstellt werden. Die Reservierungsinformation kann die Ladestationskennung sowie eine Dauer einer Reservierung enthalten. Bei der Dauer der Reservierung kann beispielsweise die zuvor berechnete Fahrtzeit von der Mobilstation 14 zu der Ladestation 4a Berücksichtigung finden. Nachdem die Reservierungsinformation berechnet wurde, wird von der Zentrale 12 ein Reservierungssignal (28) an die Ladestation 4a übermittelt. Die Ladestation 4a kann dann über geeignete Mittel anzeigen, dass eine Reservierung vorliegt.

Wenn der Nutzer nun an der Ladestation 4a angekommen ist, kann er einen Ladevorgang anstoßen. Hierbei kann in der Ladestation 4a bereits die Benutzeridentifikation mit einer Benutzeridentifikation aus der Reservierungsinformation abgeglichen werden. Bei einem positiven Vergleichsergebnis kann ein Ladevorgang angestoßen werden, wobei die Ladestation 4a und die Zentrale 12 Informationen den eigentlichen Ladevorgang betreffend (30, 32) austauschen.

Die Ladestation 4a-c können ihre Ortsinformationen nicht lediglich aus dem Mobilfunknetz 6 ermitteln. In der Figur 1 ist beispielsweise auch gezeigt, dass die Ladestation 4b im Bereich von zwei W-LAN Netzen 18a, 18b ist. Die Kennungen der W-LAN Netze können von der Ladestation 4b ausgelesen werden und für die Ortsbestimmung verwendet werden. Hierzu können die Kennungen der sichtbaren W-LAN Netze 18a, 18b und der Ladestation 4b an die Zentrale 12 übermittelt werden. In der Zentrale 12 kann überprüft werden, ob zu der entsprechenden W-LAN Kennung eine geographische Information in Form von GPS-Koordinaten vorhanden ist. Falls ja, kann diese Information auch als Ortsinformation für die Ladestation 4b verwendet werden.

Mit Hilfe des gezeigten Verfahrens ist es möglich, verschiedenste Informationen über Ladestationen zentralseitig zu konsolidieren und in geeigneter Form verfügbar zu machen. Durch die Möglichkeit der Reservierung ist es in besonders komfortabler Weise möglich, dass ein Benutzer eine Ladestation auswählt und beim Eintreffen an der Ladestation den Ladevorgang auch tatsächlich auslösen kann.

## Patentansprüche

1. Verfahren zum Bereitstellen von Informationen über Ladestationen (4) für Elektrofahrzeuge bei dem
- Ladestationsinformationen umfassend zumindest eine einer jeweiligen Ladestation (4) zugeordnete Ladestationskennung und zumindest eine der jeweiligen Ladestation (4) zugeordnete Ortsinformation für eine Mehrzahl von Ladestationen (4) gespeichert werden,
- von einer Mobilstation (14) eine zumindest eine Identifikation der Mobilstation (14) und eine geographische Information der Mobilstation (14) enthaltende Ladeanfrage (22) empfangen wird,
- ein Tupel von Ladestationsinformationen aus der Mehrzahl von gespeicherten Ladestationsinformationen abhängig von zumindest der empfangenen Ladeanfrage (22) derart ausgewählt wird, dass die empfangene geographische Information mit der jeweiligen Ortsinformation der Ladestationen (4) verglichen wird und bei einem Vergleichsergebnis, das einen bestimmten Entfernungswert zwischen Lade - und Mobilstation (14) nicht überschreitet, die entsprechende Ladestationsinformationen zumindest in Teilen dem Tupel hinzugefügt wird und
- das Tupel zumindest in Teilen unter Verwendung der Identifikation der Mobilstation (14) an die Mobilstation (14) gesendet wird,
**dadurch gekennzeichnet, dass** die Ladeanfrage (22) zusätzlich eine Information darüber enthält, ob das Elektrofahrzeug mit Gleichstrom und/oder Wechselstrom geladen werden kann,.

2. Verfahren nach Anspruch 1, **dadurch gekennzeichnet, dass** in den Ladestationsinformationen zusätzlich Statusinformationen und/oder Betreiberinformationen und/oder Ladetyp und/oder Steckertyp der jeweiligen Ladestation (4) gespeichert werden.

3. Verfahren nach Anspruch 2, **dadurch gekennzeichnet, dass** die Statusinformationen zumindest abhängig von von einer jeweiligen Ladestation (4) empfangenen Information und/oder Reservierungsinformationen für die jeweilige Ladestation (4) sind.

4. Verfahren nach einem der vorangehenden Ansprüchen, **dadurch gekennzeichnet, dass** in der Ladeanfrage (22) zusätzlich Informationen zu einem Ladetyp des Elektrofahrzeugs und/oder einem Steckertyp des Elektrofahrzeugs und/oder einer Benutzeridentifikation und/oder einer Restreichweite des Elektrofahrzeugs und/oder einem Ladezustand einer Batterie des Elektrofahrzeugs enthalten sind.

5. Verfahren nach einem der vorangehenden Ansprüchen, **dadurch gekennzeichnet, dass** die geographischen Informationen in der Mobilstation (14) oder durch das Mobilfunknetz (14) erfasst werden.

6. Verfahren nach einem der vorangehenden Ansprüchen, **dadurch gekennzeichnet, dass** das Tupel zusätzlich abhängig von der empfangenen Ladeanfrage (22) derart ausgewählt wird, dass zumindest
- die empfangene Information zu dem Ladetyp des Elektrofahrzeugs mit dem Ladetyp der jeweiligen Ladestation (4) verglichen wird; und/oder
- die empfangene Information zu dem Steckertyp des Elektrofahrzeugs mit dem Steckertyp der jeweiligen Ladestation (4) verglichen wird; und/oder
- die empfangene Information der Restreichweite des Elektrofahrzeugs mit Ortsinformationen der jeweiligen Ladestation (4) verglichen wird; und/oder
- mit Hilfe der empfangenen Benutzeridentifikation eine Betreiberinformation ermittelt wird und diese mit der Betreiberinformation der jeweiligen Ladestation (4) verglichen wird; und/oder
- ein Sollstatus für eine Ladestation (4) mit Statusinformation der jeweiligen Ladestation (4) verglichen wird und bei einem Vergleichsergebnis, das einen bestimmten Entfernungswert zwischen Lade - und Mobilstation (14) nicht überschreitet, die entsprechende Ladestationsinformation zumindest in Teilen dem Tupel hinzugefügt wird.

7. Verfahren nach einem der vorangehenden Ansprüchen, **dadurch gekennzeichnet, dass** aus der empfangenen geographischen Information zusammen mit vorzugsweise dynamisch gespeicherten Verkehrsinformationen und der Ortsinformation der jeweiligen Ladestationen (4) eine relative Entfernungsinformation berechnet wird.

8. Verfahren nach einem der vorangehenden Ansprüchen, **dadurch gekennzeichnet, dass** die Ladestationsinformationen in dem Tupel priorisiert angeordnet werden, insbesondere dass die Priorisierung abhängig von dem Vergleichsergebnis und/oder der relativen Entfernungsinformation erfolgt.

9. Verfahren nach einem der vorangehenden Ansprüchen, **dadurch gekennzeichnet, dass** eine ausgewählte Ladestationsinformation einer Ladestation (4) ausgewählt aus dem Tupel von der Mobilstation (14) empfangen wird und dass die Ladestationskennung aus der ausgewählten Ladestationsinformation ermittelt wird und eine Reservierungsinformation mit der Ladestationskennung für die ausgewählte Ladestation (4) erstellt wird.

10. Verfahren nach Anspruch 9, **dadurch gekennzeichnet, dass** die Reservierungsinformation zumindest enthält
- eine Reservierungsdauer, und/oder
- eine Startzeit eines Reservierungszeitraums, und/oder
- ein Endzeit eines Reservierungszeitraums, und/oder
- eine Dauer einer Reservierungswartezeit, und/oder
- eine Benutzeridentifikation.

11. Verfahren nach Anspruch 10, **dadurch gekennzeichnet, dass** die Dauer der Reservierungswartezeit abhängig von der geographischen Information, der Ortsinformation und vorzugsweise der relativen Entfernungsinformation berechnet wird und/oder dass während der Dauer der Reservierungswartezeit eine Ladevorgang an der jeweiligen Ladestation (4) ausschließlich mit der Benutzeridentifikation aktivierbar ist.

12. Verfahren nach einem der vorangehenden Ansprüchen, **dadurch gekennzeichnet, dass** eine Ladeanforderung umfassend eine Ladestationskennung und eine Benutzeridentifikation empfangen wird und dass die empfangen Ladestationskennung und Benutzeridentifikation mit Reservierungsinformationen für die Ladestation (4) verglichen werden, insbesondere dass ein Freigabesignal für einen Ladestrom abhängig von einem Vergleichsergebnis ist.

13. Verfahren nach einem der vorangehenden Ansprüchen, **dadurch gekennzeichnet, dass** die Ladeanfrage (22) und/oder die ausgewählte Ladestationsinformation und/oder die Ladeanforderung von der Mobilstation (14) über einen Signalisierungskanal eines Mobilfunknetzes (14) empfangen werden und/oder dass durch das Senden der Ladeanfrage (22) und/oder der ausgewählten Ladestationsinformation und/oder der Ladeanforderung von der Mobilstation (14) ein nachrichtenspezifisches und/oder empfängerspezifisches Berechnungssignal in dem Mobilfunknetz (14) ausgelöst wird.

14. System (2) zum Bereitstellen von Informationen über Ladestationen (4) für Elektrofahrzeuge umfassend:
- zumindest eine Mehrzahl von Ladestationen (4), für welche Ladestationsinformationen umfassend zumindest eine einer jeweiligen Ladestation (4) zugeordnete Ladestationskennung und zumindest eine der jeweiligen Ladestation (4) zugeordnete Ortsinformation gespeichert sind,
- eine Zentrale eingerichtet zum Empfangen von zumindest einer Identifikation einer Mobilstation (14) und einer eine geographische Information der Mobilstation (14) enthaltende Ladeanfrage (22),
- wobei die Zentrale eingerichtet ist zum Auswählen eines Tupels aus Ladestationsinformationen aus der Mehrzahl von Ladestationsinformationen abhängig von zumindest der empfangenen Ladeanfrage (22) derart, dass die empfangenen geographischen Information mit den jeweiligen Ortsinformationen der Ladestationen (4) verglichen werden und bei einem Vergleichsergebnis, das einen bestimmten Entfernungswert zwischen Lade - und Mobilstation (14) nicht überschreitet, die entsprechende Ladestationsinformationen zumindest in Teilen dem Tupel hinzugefügt wird, und
- wobei die Zentrale eingerichtet ist zum Versenden des Tupels zumindest in Teilen unter Verwendung der Identifikation der Mobilstation (14) an die Mobilstation (14),
**dadurch gekennzeichnet, dass** die Ladeanfrage (22) zusätzlich eine Information darüber enthält, ob das Elektrofahrzeug mit Gleichstrom und/oder Wechselstrom geladen werden kann.

## Claims

1. Method for providing information about charging stations (4) for electric vehicles in which
- charging station information comprising at least one charging station identification assigned to a respective charging station (4) and at least one item of location information assigned to the respective charging station (4) are stored for a plurality of charging stations (4),
- a charging request (22) containing at least one identification of a mobile station (14) and one item of geographical information of the mobile station (14) is received from the mobile station (14),
- a tuple of charging station information from the plurality of items of stored charging station information dependent on at least the received charge request (22) such that the received geographical information is compared with the respective location information of the charging stations (4) and results that a defined distance value between charging station (4) and mobile station (14) is not exceeded, the corresponding charging station information is at least in part added to the tuple and, and
- the tuple is sent at least in parts to the mobile station (14) using the identification of the mobile station (14),
**characterized in that**
- the charging request (22) additionally contains information as to whether the electric vehicle can be charged with direct current and/or alternating current.

2. Method according to claim 1,
**characterised in that**
status information and/or operator information and/or charging type and/or plug type of the respective charging station (4) are additionally stored in the charging station information.

3. Method according to claim 2,
**characterised in that**
the status information is at least dependent on information received from a respective charging station (4) and/or reservation information for the respective charging station (4).

4. Method according to any one of the preceding claims,
**characterised in that**
information regarding a charging type of the electric vehicle and/or a plug type of the electric vehicle and/or a user identification and/or a remaining range of the electric vehicle and/or a state of charge of a battery of the electric vehicle is additionally contained in the charge request (22).

5. Method according to any one of the preceding claims,
**characterised in that**
the geographical information is acquired in the mobile station (14) or through the mobile network (14).

6. Method according to any one of the preceding claims,
**characterised in that**
the tuple dependent on the received charge request (22) is additionally selected such that at least
- the received information regarding the charging type of the electric vehicle is compared with the charging type of the respective charging station (4); and/or
- the received information regarding the plug type of the electric vehicle is compared with the plug type of the respective charging station (4); and/or
- the received information of the remaining range of the electric vehicle is compared with location information of the respective charging station (4); and/or
- an item of operator information item is determined by means of the received user identification and is compared with the item of operator information of the respective charging station (4); and/or
- a desired status for a charging station (4) is compared with status information of the respective charging station (4) and when the a comparison results that a defined distance value between mobile station (14) and charging station (4) is not exceeded, the corresponding charging station information is at least in part added to the tuple.

7. Method according to any one of the preceding claims,
**characterised in that**
relative distance information can be calculated from the received geographical information together with preferably dynamically stored traffic information and the location information of the respective charging stations (4).

8. Method according to any one of the preceding claims,
**characterised in that**
the charging station information is arranged prioritised in the tuple, in particular in that the prioritisation is made dependent on the comparison result and/or on the relative distance information.

9. Method according to any one of the preceding claims,
**characterised in that**
a selected item of charging station information of a charging station (4) selected from the tuple is received from the mobile station (14), and **in that** the charging station identification from the selected item of charging station information is determined and reservation information is created with the charging station identification for the selected charging station (4).

10. Method according to claim 9,
**characterised in that**
the reservation information contains at least
- a reservation duration and/or
- a start time of a reservation period and/or
- an end time of a reservation period and/or
- a duration of a reservation waiting time and/or
- a user identification.

11. Method according to claim 10,
**characterised in that**
the duration of the reservation waiting time is calculated dependent on the geographical information, the location information and preferably the relative distance information, and/or **in that** for the duration of the reservation waiting time a charging process can only be activated at the respective charging station (4) with the user identification.

12. Method according to any one of the preceding claims,
**characterised in that**
a charge requirement comprising a charging station identification and a user identification is received, and **in that** the received charging station identification and user identification is compared with reservation information for the charging station (4), in particular **in that** an enabling signal for a charging current is dependent on a comparison result.

13. Method according to any one of the preceding claims,
**characterised in that**
the charge request (22) and/or the selected charging station information and/or the charge requirement are received from the mobile station (14) via a signalling channel of a mobile network (14), and/or **in that** by sending the charge request (22) and/or the selected charging station information and/or the charge requirement from the mobile station (14) a message-specific and/or recipient-specific fee-charging signal is triggered in the mobile network(14).

14. System (2) for providing information via charging stations (4) for electric vehicles comprising:
- at least a plurality of charging stations (4), for which charging station information comprising at least one charging station identification assigned to a respective charging station (4) and at least one item of location information assigned to the respective charging station (4) is stored,
- a control centre set up to receive at least one identification of a mobile station (14) and one charge request (22) containing an item of geographical information for the mobile station (4),
- wherein the control centre is set up to select a tuple consisting of charging station information from the plurality of charging station information dependent on at least the received charge request (22) such that the received geographical information is compared with the respective location information of the charging stations (4) and when a comparison results that a defined distance value between mobile station (14) and charging station (4) is not exceeded, the corresponding charging station information is at least in part added to the tuple, and
- wherein the control centre is set up to at least in part send the tuple to the mobile station (14) using the identification of the mobile station (14)
**characterized in that**
- the charging request (22) additionally contains information as to whether the electric vehicle can be charged with direct current and/or alternating current.

## Revendications

1. Procédure de mise à disposition d'informations sur des bornes de recharge (4) pour véhicules électriques, où
- des informations de station de charge comprenant au moins une identification de station de charge affectée à une station de charge respective (4) et au moins une information d'emplacement affectée à la station de charge respective (4) pour une pluralité de stations de charge (4) sont enregistrées,
- une demande de charge (22) contenant au moins une identification de la station mobile (14) et des informations géographiques de la station mobile (14) est reçue d'une station mobile (14),
- un tuple d'informations de station de charge est sélectionné parmi la pluralité d'informations de station de charge mémorisées, en fonction d'au moins la demande de charge reçue (22), de telle sorte que les informations géographiques reçues sont comparées aux informations de localisation respectives des stations de charge (4) et, dans un résultat de comparaison ne dépassant pas une certaine valeur de distance entre la station de charge et la station mobile (14), les informations correspondantes de station de charge sont ajoutées au moins partiellement au tuple, et
- le tuple est envoyé à la station mobile (14) au moins en partie en utilisant l'identification de la station mobile (14),
**caractérisé en ce que**
la demande de charge (22) contient additionnellement une information sur la possibilité de charger le véhicule électrique avec du courant continu et/ou du courant alternatif.

2. Procédé selon la revendication 1,
**caractérisé en ce que**
des informations d'état et/ou des informations d'opérateur et/ou de type de charge et/ou de type de prise de la station de charge respective (4) sont additionnellement mémorisées dans les informations de la station de charge.

3. Procédé selon la revendication 2,
**caractérisé en ce que**
les informations d'état dépendent au moins d'informations reçues d'une station de charge respective (4) et/ou d'informations de réservation pour la station de charge respective (4).

4. Procédé selon l'une des revendications précédentes,
**caractérisé en ce que**
la demande de charge (22) contient additionnellement des informations sur un type de charge du véhicule électrique et/ou un type de prise du véhicule électrique et/ou une identification de l'utilisateur et/ou une autonomie résiduelle du véhicule électrique et/ou un état de charge d'une batterie du véhicule électrique.

5. Procédé selon l'une des revendications précédentes,
**caractérisé en ce que**
l'information géographique est acquise dans la station mobile (14) ou par le réseau radio mobile (14).

6. Procédé selon l'une des revendications précédentes,
**caractérisé en ce que**
le tuple est en outre sélectionné en fonction de la demande de chargement reçue (22) de telle sorte qu'au moins
- les informations reçues sur le type de charge du véhicule électrique sont comparées au type de charge de la station de charge respective (4) ; et/ou
- les informations reçues sur le type de prise du véhicule électrique sont comparées avec le type de prise de la station de charge respective (4) ; et/ou
- l'information reçue sur l'autonomie résiduelle du véhicule électrique est comparée à l'information de localisation de la station de charge respective (4) ; et/ou
- une information sur l'opérateur est déterminée à l'aide de l'identification de l'utilisateur reçue et cette information sur l'opérateur est comparée à l'information sur l'opérateur de la station de charge respective (4) ; et/ou
- un état cible pour une station de charge (4) est comparé aux informations d'état de la station de charge respective (4), et
dans un résultat de comparaison qui ne dépasse pas une certaine valeur de distance entre la station de charge et la station mobile (14), l'information correspondante de la station de charge est ajoutée au moins en partie au tuple.

7. Procédé selon l'une des revendications précédentes,
**caractérisé en ce qu'**
une information de distance relative est calculée à partir des informations géographiques reçues ainsi que des informations de trafic stockées de préférence de manière dynamique et les informations de localisation des stations de charge respectives (4).

8. Procédé selon l'une des revendications précédentes,
**caractérisé en ce que**
les informations relatives à la station de charge sont classées par ordre de priorité dans le tuple, en particulier **en ce que** la hiérarchisation a lieu en fonction du résultat de la comparaison et/ou des informations relatives de distance.

9. Procédé selon l'une des revendications précédentes,
**caractérisé en ce qu'**
une information de station de charge d'une station de charge (4) sélectionnée parmi le tuple est reçue de la station mobile (14) et **en ce que** l'identification de la station de charge est déterminée à partir de l'information de station de charge sélectionnée et une information de réservation avec l'identification de station de charge sélectionnée pour la station de charge (4) est créée.

10. Procédé selon la revendication 9,
**caractérisé en ce que**
l'information de réservation contient au moins
- une période de réservation, et/ou
- une heure de début d'une période de réservation, et/ou
- une heure de fin d'une période de réservation, et/ou
- une durée d'un temps d'attente pour une réservation, et/ou
- une identification d'utilisateur.

11. Procédé selon la revendication 10,
**caractérisé en ce que**
la durée du temps d'attente de réservation est calculée en fonction de l'information géographique, de l'information de localisation et de préférence de l'information de distance relative et/ou **en ce que** pendant la durée du temps d'attente de réservation une opération de charge à la station de charge respective (4) peut être activée exclusivement avec l'identification d'utilisateur.

12. Procédé selon l'une des revendications précédentes,
**caractérisé en ce qu'**
une demande de charge comprenant une identification de station de charge et une identification d'utilisateur est reçue et **en ce que** l'identification de station de charge et l'identification d'utilisateur reçues sont comparés aux informations de réservation pour la station de charge (4), en particulier qu'un signal de validation pour un courant de charge est dépendant du résultat de comparaison.

13. Procédé selon l'une des revendications précédentes,
**caractérisé en ce que**
la demande de charge (22) et/ou l'information de station de charge sélectionnée et/ou la demande de charge sont reçues de la station mobile (14) via un canal de signalisation d'un réseau radio mobile (14) et/ou **en ce qu'**un signal de calcul spécifique au message et/ou au récepteur est déclenché dans le réseau radio mobile (14) en envoyant la demande de charge (22) et/ou l'information de station de charge sélectionnée et/ou la demande de charge depuis la station mobile (14).

14. Système (2) de mise à disposition d'informations sur des stations de charge (4) pour véhicules électriques comprenant :
- au moins une pluralité de stations de charge (4), pour lesquelles des informations de station de charge comprenant au moins une identification de station de charge affectée à une station de charge respective (4) et au moins une information de position affectée à une des stations de charge respectives (4) sont mémorisées,
- une centrale configurée pour recevoir au moins une identification d'une station mobile (14) et une demande de charge (22) contenant une information géographique de la station mobile (14),
- où la centrale est configurée pour sélectionner un tuple d'informations de station de charge parmi la pluralité d'informations de station de charge en fonction d'au moins la demande de charge reçue (22) de telle sorte que l'information géographique reçue est comparée aux informations de localisation respectives des stations de charge (4) et, dans le cas d'un résultat de comparaison ne dépassant pas une certaine valeur de distance entre la station de charge et la station mobile (14), les informations correspondantes de station de charge sont ajoutées au moins en partie au tuple, et
- où la centrale est configurée pour envoyer le tuple au moins en partie à la station mobile (14) en utilisant l'identification de la station mobile (14),
**caractérisé en ce que**
la demande de charge (22) contient additionnellement une information sur la possibilité de charger le véhicule électrique avec du courant continu et/ou du courant alternatif.
